# EUROPÄISCHE PATENTSCHRIFT

(11) **EP 1 626 479 B1**
(45) Veröffentlichungstag und Bekanntmachung des Hinweises auf die Patenterteilung: **14.03.2007**
(21) Anmeldenummer: 05017579.3
(22) Anmeldetag: 12.08.2005
(51) Int. Cl.: H02K 5/14, H01R 39/38, D06F 58/28

(54) **Kohlebürstenhalteranordnung**
Carbon brush holder arrangement
Dispositif porte-balai pour balai en charbon

(30) Priorität: 12.08.2004 DE 102004039374; 24.09.2004 DE 202004014936 U
(43) Veröffentlichungstag der Anmeldung: 15.02.2006
(73) Patentinhaber: SCHUNK Motorensysteme GmbH, D-27777 Ganderkesee (DE)
(72) Erfinder: Raschke Jan-Eric, 28213 Bremen (DE); Romano Salvatore, 26203 Wardenburg (DE)
(74) Vertreter: Stoffregen, Hans-Herbert

(56) Entgegenhaltungen:
- EP-A- 0 547 437
- WO-A-03/028171
- DE-A1- 19 523 896
- US-A- 2 743 530
- US-A- 5 753 992
- US-A- 5 793 141
- US-A1- 2003 071 536

## Beschreibung

Die Erfindung bezieht sich auf eine Kohlebürstenhalteranordnung mit einer in einem Kohlebürstenhalter verlaufenden Kohlebürstenführung für eine in dieser axial verschiebbare Kohlebürste, zumindest einem auf rückseitige Stirnfläche der Kohlebürste sich abstützenden Federelement sowie einer von der Kohlebürste ausgehenden und mit dem Kohlebürstenhalter verbundenen Litze.

Entsprechende Kohlebürstenhalteranordnungen werden zur Übertragung von Strömen und Signalen benutzt. Dabei muss darauf geachtet werden, dass die Kohlebürste weitgehend spielfrei in der Kohlebürstenführung axial verschiebbar ist. Gleichzeitig muss eine einfache Montage der Kohlebürste sowie ein Befestigen der von dieser ausgehenden Kohlelitze mit dem Kohlebürstenhalter möglich sein.

Diesbezügliche Kohlebürstenhalteranordnungen werden auch zur Signalerfassung zur Restfeuchtemessung in Wäschetrocknern benutzt. Zur Signalerfassung wird folgender Aufbau benutzt. Auf der rückseitigen Seite der Wäschetrommel des Trockners läuft ein Schleifkontakt, durch den ein niedriger Strom an die Wäschetrommel angelegt wird. Dieser Strom wird über die Wäschetrommel zur im Inneren befindlichen feuchten Wäsche geführt. Durch die Feuchtigkeit der Wäsche entsteht ein elektrischer Kontakt zwischen Wäschetrommel und der Spitze eines in der Wäschetrommel montierten als Mitnehmer bezeichneten Kontaktstiftes. Der Mitnehmer besteht aus Kunststoff und weist an seiner Spitze einen elektrisch leitenden Kontakt auf. Der Kontakt ist elektrisch leitend mit einem Schleifband verbunden, der gegenüber der Trommel elektrisch isoliert auf dieser angeordnet ist. Auf dem Schleifband ist sodann eine Kohlebürste abgestützt, die den durch den Schleifkontakt angelegten Strom abgreift und diesen an Kabelbaum einer Auswerteelektronik zuführt. Je nach Feuchtigkeit der Wäsche ändert sich der Stromabfall zwischen Schleifkontakt und Kohlebürste, so dass sich Rückschlüsse auf den Feuchtigkeitsgrad der Wäsche im Innern der Wäschetrommel schließen lassen. Hierdurch wird die Laufzeit des Trockners geregelt.

Das auf der Außenumfangsfläche der Wäschetrommel verlaufende Schleifband ist als flaches Band ausgebildet und ist mit seinen Enden mechanisch verbunden. An der Verbindungsstelle weist das Schleifband häufig eine Lücke oder einen Höhenversatz auf. Beim Überwinden der Verbindungsstelle durch eine Kohlebürste treten somit unerwünschte Geräusche auf. Auch erfolgt eine ungleichmäßige Belastung der Kohlebürste.

Eine gattungsgemäße Kohlebürste ist z. B. der DE-A-195 23 896 oder der EP-A-0 547 437 zu entnehmen. Aufgrund der punktuellen Einwirkung einer Schraubendruckfeder auf der Rückseite der Kohlebürste ist nicht ausgeschlossen, dass dann, wenn zwischen Kohlebürste und deren Führung ein Spiel besteht, die Kohlebürste innerhalb der Führung kippt, so dass zum einen Geräusche auftreten und zum anderen eine gleichmäßige Abnutzung der Kohlebürste nicht gewährleistet ist.

Damit ein Spiel zwischen einer Führung und einer Kohlebürste unterbunden werden kann, besteht diese nach der WO-A-03/028171 aus zwei quaderförmigen Bürstenteilen, die mittels eines Spreizelementes an gegenüberliegenden Wandungen der Kohlebürstenführung kraftschlüssig anlegbar sind. Auf der Außenseite des Spreizelementes können zwei Druckfedem einwirken.

Um eine Kohlebürste nach der DE-A-195 23 896 zu führen, sind in gegenüberliegenden Längsseiten der Kohlebürste Schlitze ausgebildet, in die Führungsschienen eingreifen. Um eine Montage zu erleichtern, ist an einer Seitenfläche der Kohlebürste eine als Lasche ausgebildete Bürstenbremse anlegbar.

Aus der US-A-5,793,141 ist eine modular aufgebaute Kohlebürstenhalterung bekannt. Zur Druckbeaufschlagung der Kohlebürste in Richtung eines Kommutators wirkt auf der Rückseite der Kohlebürste ein Querschenkel eines U-förmigen Abschnitts einer Doppelspiralfeder.

Eine Kohlenbürstenhalterung aus Kunststoff wird in der US-A-5,753,992 beschrieben.

Die US-A-2003/0071536 sieht eine Kohlebürstenhalterung mit einem plattenförmigen Basisabschnitt und geneigt zu diesem verlaufende Kohlebürstenführung vor.

Aus der US-A-2,753,530 ist eine Steuerung für Wäschetrockner bekannt.

Der vorliegenden Erfindung liegt die Aufgabe zu Grunde, eine Kohlebürstenhalteranordnung der eingangs genannten Art so weiterzubilden, dass die Kohlebürste präzise, also mit geringem Spiel geführt wird. Auch soll sichergestellt sein, dass unerwünschte Geräusche vermieden werden, wenn die Kohlebürste Unebenheiten überstreicht, wie diese im Verbindungsbereich von Schleifbändern auftreten können.

Zur Lösung der Aufgabe wird eine Kohlebürstenhalterung zuvor beschriebener Art im Wesentlichen dadurch weitergebildet, dass innerhalb der Kohlebürstenhalterung zwei jeweils auf einen Längsseitenrandbereich der rückseitigen Stirnfläche der Kohlebürste abstützende erste Federelemente verlaufen und dass von der Kohlebürstenhalterung ein quer zur Längsrichtung der Kohlebürste und auf diese einwirkendes zweites Federelement ausgeht.

Abweichend von vorbekannten Kohlebürstenhalteranordnungen wirken auf die Kohlebürste in deren axiale Richtung zwei zueinander beabstandete Federelemente, und zwar im jeweiligen Randbereich der schmaleren Längsseiten der Kohlebürste, so dass eine gleichmäßige Druckbeaufschlagung mit der Folge gegeben ist, dass auch dann, wenn sich die Kohlebürste auf unebenen Kontaktflächen abstützt, ein weitgehend flächiges Aufliegen auf diesen gegeben ist mit der Folge, dass unerwünschte Geräusche nicht auftreten. Gleichzeitig wird ein ungleichmäßiger Verschleiß der Kohlebürste vermieden.

Dadurch, dass die Kohlebürste an zwei Punkten gefedert ist, ist ein sanftes Ablaufen auf der Kontaktfläche und somit eine Geräuschreduzierung beim Passieren der Verbindungsstelle gegeben. Gleichzeitig ergibt sich der Vorteil, dass beim Einsatz zum Beispiel bei Wäschetrocknern, die links und rechts herumdrehen, ein gleichmäßiger Verschleiß ungeachtet wechselnder Drehrichtungen gegeben ist.

Ferner geht von dem Kohlebürstenhalter ein quer zur Längsrichtung der Kohlebürste und auf diese einwirkendes zweites Federelement aus, wodurch ein Andrücken der Kohlebürste an einer Seite der Kohlebürstenführung erfolgt. Somit wird das Spiel der Kohlebürste innerhalb der Kohlebürstenführung reduziert. Auch hierdurch erfolgt eine Verminderung der Laufgeräusche.

In weiterer hervorzuhebender eigenerfinderischer Ausgestaltung ist vorgesehen, dass bei mit dem Kohlebürstenhalter verbundener Litze diese eine wirksame Länge derart aufweist, dass die Kohlebürste in der Kohlebürstenführung zurückgehalten ist. Somit ist bei in der Kohlebürstenführung montierter Kohlebürste sichergestellt, dass die Kohlebürste mit definierter Länge aus der Kohlebürstenführung vorsteht, ohne dass ein unkontrolliertes Herausgleiten erfolgen kann. Somit dient die Litze als Rückhaltesystem, das sicherstellt, dass ungeachtet der auf die Kohlebürste einwirkenden ersten Federelemente die Kohlebürste in der Kohlebürstenführung verbleibt. Dabei ist in Weiterbildung der Erfindung vorgesehen, dass die Litze mit einem Steckkontakt verbunden ist, der in dem Kohlebürsterlhalter -auch Kohlebürstenhalterung genannt- verrastet ist. Somit ist eine einfache und schnelle Montage der Kohlebürste ohne mechanische Hilfen wie Schrauben oder einem separaten Schweißprozess möglich.

Bei dem ersten Federelement handelt es sich insbesondere um eine Schraubendruckfeder.

Bei dem zweiten Federelement handelt es sich insbesondere um eine auf einen Längsseitenrand der Kohlebürste einwirkende Spiralbandfeder. Alternativ besteht auch die Möglichkeit, einen Abschnitt des Kohlebürstenhalters wie einen zungenförmigen Ausschnitt aus einer Seitenwandung federnd auszubilden, um die gewünschte seitliche Krafteinwirkung auf die Kohlebürste sicherzustellen. Dabei kann der zungenförmige Ausschnitt oder Abschnitt einen in Richtung der Kohlebürste sich erstreckenden Vorsprung aufweisen.

Die Kohlebürstenhalterung selbst besteht aus Kunststoff und ist vorzugsweise als Spritzgussteil ausgebildet.

Zur weiteren Geräuschreduzierung und zum sicheren flächigen Anliegen der Kohlebürste auf einer Kontaktfläche ist vorgesehen, dass die Kohlebürste eine Querschnittsfläche einer Breite aufweist, die in etwa der der Kontaktfläche des Schleifbands entspricht. In Längsrichtung der Kontaktfläche, also zum Beispiel des Schleifbandes, sollte die Kohlebürste ein Mehrfaches der Breite aufweisen. Insbesondere ist vorgesehen, dass die Querschnittsfläche eine Länge aufweist, die in etwa fünf- bis zehnmal größer als die Breite der Kohlebürste ist. Daher zeichnet sich die Erfindung auch dadurch aus, dass der wirksame Querschnitt der die Kohlebürste geführt aufnehmenden Kohlebürstenführung eine Breite B und eine Länge L mit L >> B aufweist, wobei insbesondere die Länge L sich auf 40 mm ≤ L ≤ 20 mm und die Breite B sich auf vorzugsweise 6 mm ≤ B ≤ 2mm belaufen.

Um bei der Verwendung einer Schraubendruckfeder als zweites Federelement deren Federkraft gezielt einstellen zu können, sieht eine Weiterbildung der Erfindung vor, dass die Kohlenstoffhalterung ein Spritzgussteil mit einer durch einen verstellbaren Einsatz in dem Spritzgießwerkzeug in seiner Stellung vorgegebenen Fixierung für die Spiralfeder ist.

Um zu überprüfen, ob auf die Kohlebürste tatsächlich zwei erste Federelemente einwirken, ist des Weiteren vorgesehen, dass die Kohlebürstenhalterung im jeweiligen Verschiebeweg des ersten Federelementes zumindest eine Durchbrechung aufweist.

Die Kohlebürstenhalterung umfasst insbesondere einen plattenförmigen Basisabschnitt, von dem die die Kohlebürstenführung begrenzenden Wandungen ausgehen, wobei Längsachse der Kohlebürstenführung zur von dem Basisabschnitt aufgespannten Ebene einen Winkel α mit insbesondere 40° ≤ α ≤ 80° beschreibt. Über den Basisabschnitt kann sodann der Kohlehalter befestigt werden. Hierzu ist insbesondere vorgesehen, dass entlang jeweiligem Längsrand des Basisabschnitts ein zungenförmiger Rastabschnitt verläuft, zu dem beabstandet ein starrer oder im Wesentlichen starrer Steg oder Bodenabschnitt des Basisabschnitts verläuft. Somit bilden zungenförmiger Rastabschnitt und Steg bzw. Boden Halteaufnahmen zum Fixieren des Kohlebürstenhalters. Dabei kann zusätzlich von dem Rastabschnitt ein Rastvorsprung ausgehen, der steg- bzw. bodenabgewandt verläuft.

Der Steckkontakt verläuft in einer senkrecht oder im Wesentlichen senkrecht zum Basisabschnitt verlaufenden Aufnahme, wobei die Litze durch die Kohlebürstenführung über einen Abschnitt des Basisabschnitts zu dem Steckkontakt geführt ist. Hierdurch wird die Befestigung der Litze an dem Steckkontakt erleichtert, da durch die Führung der Litze eine in Bezug auf die Wirklänge scheinbare Verkürzung erfolgt.

Die Kohlebürstenführung wird von Längsseiten- und Querseitenwandungen begrenzt, wobei insbesondere die Querwandungen im Mittenbereich jeweils eine beabstandet zur Kohlebürste verlaufende Ausbuchtung aufweisen. Die Ausbuchtungen ergänzen sich folglich zu einem so genannten Federbauch. Somit kann eine hinreichende Kühlung erfolgen.

Insbesondere zeichnet sich die Erfindung auch aus durch eine Anordnung zur Feuchtigkeitsmessung von in einer Trockentrommel befindlichen Wäsche mit die Trockentrommel umgebenen Schleifband, auf das eine Kohlebürste abgestützt ist, die von einem Kohlebürstenhalter zuvor beschriebener Charakterisierung aufgenommen ist.

Weitere Einzelheiten, Vorteile und Merkmale der Erfindung ergeben sich nicht nur aus den Ansprüchen, den diesen zu entnehmenden Merkmalen -für sich und oder in Kombination-, sondern auch aus der nachfolgenden Beschreibung eines der Zeichnung zu entnehmenden bevorzugten Ausführungsbeispiels.

Es zeigen:

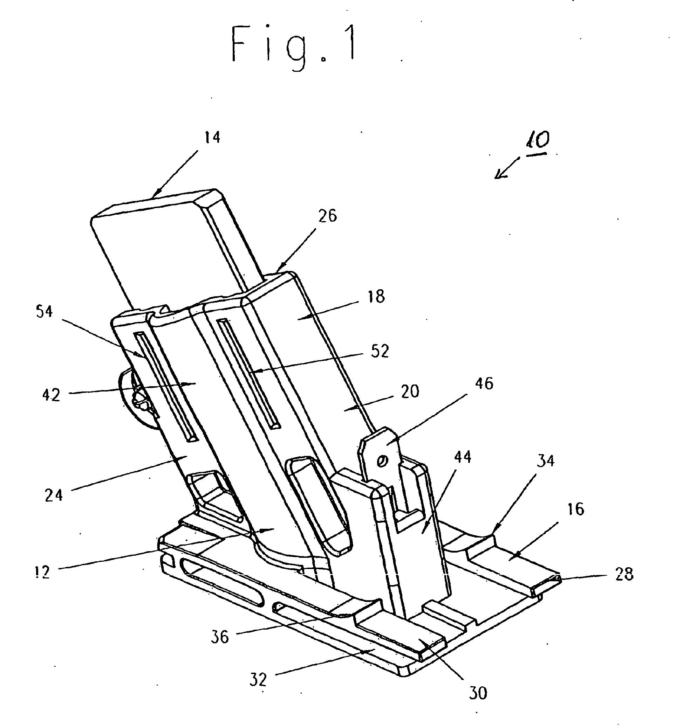

- Fig. 1: eine perspektivische Darstellung einer Kohlebürstenhalteranordnung,

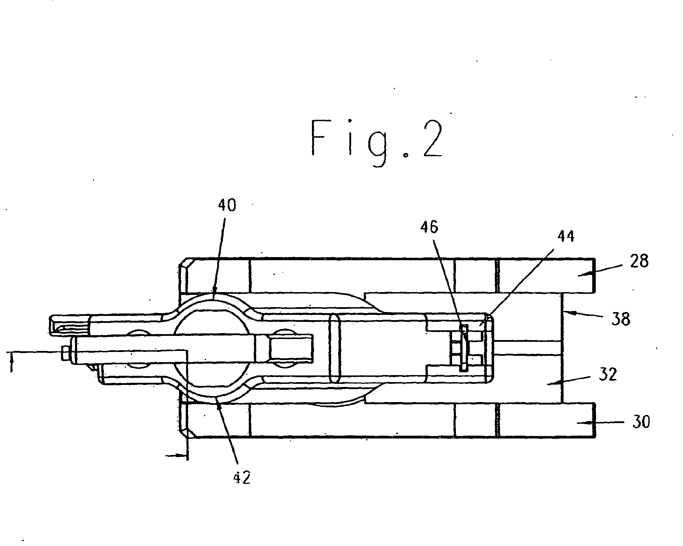

- Fig. 2: eine Draufsicht auf die Anordnung gemäß Fig. 1,

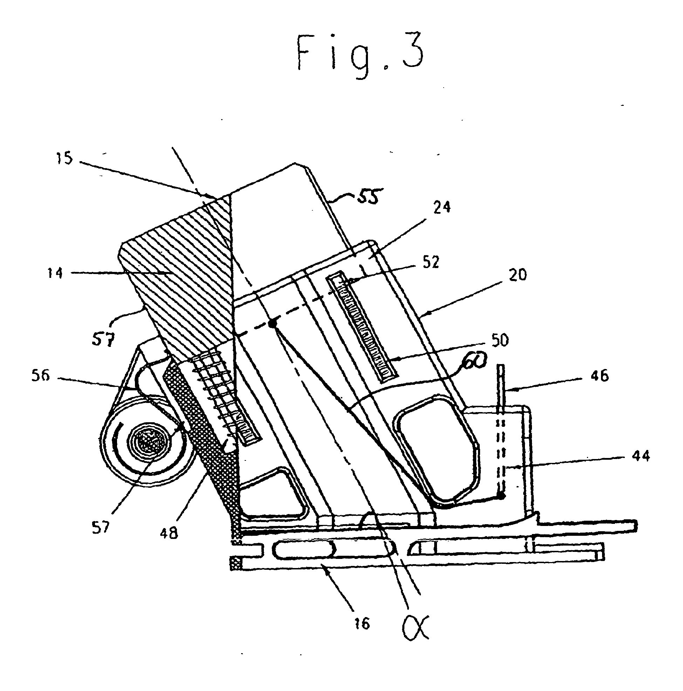

- Fig. 3: eine Seitenansicht mit Schnitt entlang der Linie A-A in Fig. 2,
- Fig. 4: eine Seitenansicht der Anordnung gemäß Fig. 1,
- Fig. 5: eine Rückansicht der Anordnung gemäß Fig. 1 und

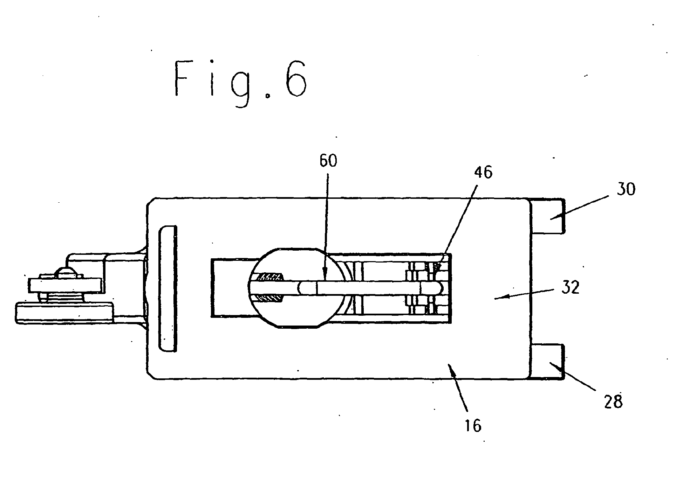

- Fig. 6: eine Unteransicht der Anordnung gemäß Fig. 1.

Den Figuren, in denen für gleiche Elemente gleiche Bezugszeichen verwendet werden, sind verschiedene Ansichten einer Kohlebürstenhalteranordnung 10 zu entnehmen, die insbesondere dazu bestimmt ist, mittels eines Kohlebürstenschleifkontaktes Signale zur Restfeuchtemessung bei Wäschetrocknern zu erfassen und weiterzuleiten, ohne dass hierdurch eine Beschränkung der Erfindung erfolgt.

Die Kohlebürstenhalteranordnung 10 besteht aus einem Kohlebürstenhalter 12, in dem axial verschiebbar eine Kohlebürste 14 angeordnet ist.

Die Kohlebürste 14 stützt sich in Betrieb mit ihrer außerhalb des Kohlebürstenhalters 12 verlaufenden Lauffläche 15 auf einer nicht dargestellten Kontaktfläche ab. Auf der Lauffläche 15 gegenüberliegender Stirnfläche wirken in nachstehend beschriebener Weise erste Federelemente ein.

Der Kohlebürstenhalter 12 umfasst einen plattenförmigen Basisabschnitt 16 und einen von diesem ausgehenden, eine Kohlebürstenführung für die Kohlebürste 14 begrenzenden schachtförmigen Körper 18, der sich aus Längsseitenwandungen 20, 22 und Querseitenwandungen 24, 26 zusammensetzt. Die Längsachse der Kohlebürstenführung verläuft dabei zu der von dem Basisabschnitt 16 aufgespannten Ebene unter einem Winkel α mit insbesondere 40° ≤ α ≤ 80°.

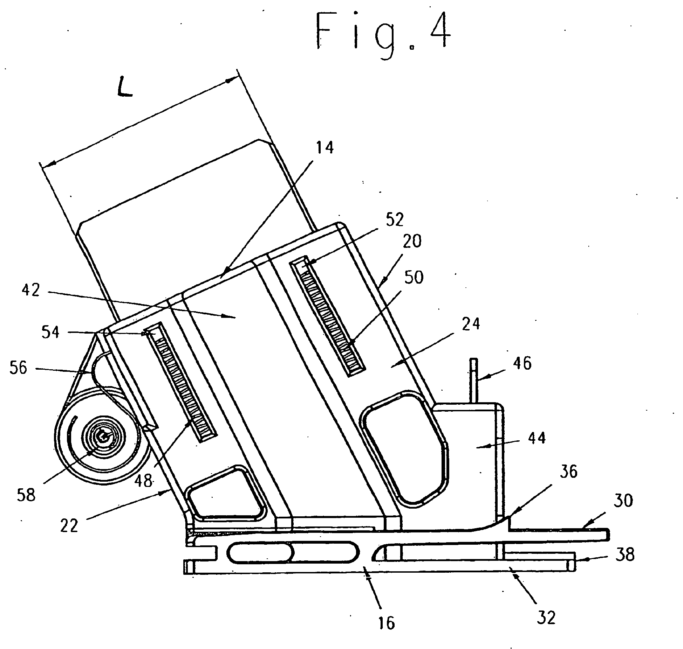

Der Basisabschnitt 16 ist zum Befestigen der Kohlebürstenhalterung 12 ausgelegt, wobei zum Beispiel ein Festklemmen an einer Befestigungsplatte erfolgen kann. Hierzu weist der Basisabschnitt 16 zwei zungenartige Schenkel 28, 30 auf, zu denen beabstandet Abschnitte einer Bodenwandung 32 des Basisabschnitts 16 verlaufen. Ferner gehen von der Oberseite der zungenartigen Schenkel 28, 30 Rastvorsprünge 34, 36 aus. Die Rastschenkel 28, 30 überragen den Stirnrand 38 der Bodenwandung 32, wie die Seitenansicht gemäß Fig. 4 verdeutlicht.

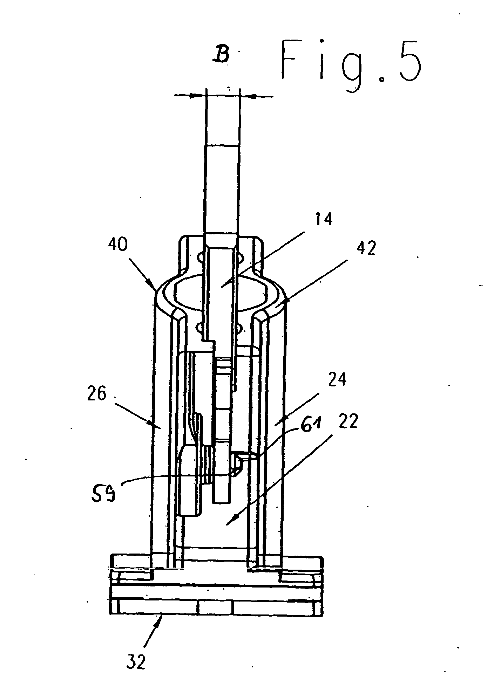

Die Querseitenwandungen 24, 26 weisen im Mittenbereich Ausbuchtungen 40, 42 auf, die beabstandet zu der Kohlebürste 14 verlaufen, wie sich insbesondere aus der Fig. 5 ergibt. Ansonsten wird die Kohlebürste 14 an den Innenflächen der Längsseitenwandungen 20, 22 und der Querseitenwandungen 24, 26 geführt.

Im Bereich der in der Zeichnung vorderen Längsseitenwandung 20 ist eine hohlquaderförmige Aufnahme 44 ausgebildet, in die ein Steckkontakt 46 einrastbar ist. Der Steckkontakt 46 verläuft dabei in einer senkrecht zu dem Basisabschnitt 16 verlaufenden Ebene.

Um die Kohlebürste 14 gleichmäßig an einer Kontaktfläche anzudrücken ungeachtet der Tatsache, dass diese eine flachquaderförmige Geometrie aufweist, also eine Lauffläche 15 mit einer Länge L, die erheblich größer als die Breite B ist, wirken auf die Kohlebürste 14 zwei vorzugsweise als Schraubendruckfedern 48, 50 ausgebildete erste Federelemente. Der Angriffspunkt der Schraubendruckfedern 48, 50 liegt dabei im jeweiligen Längsrandbereich 55. 57 der Kohlebürste 14, also angrenzend zu den Längsseitenwandungen 20, 22.

Die Länge L der Lauf- oder Kontaktfläche 15 kann 30 mm und die Breite B 4 mm betragen. Die Erstreckung der Kohlebürste 14 in Achsrichtung kann sich auf 20 mm belaufen.

Um überprüfen zu können, ob die Schraubendruckfedern 48, 50 sich tatsächlich in der Kohlebürstenführung befinden, sind in den Querseitenwandungen 24, 26 Durchbrechungen 52, 54 vorhanden, die sich in Längsrichtung der Kohlebürste 14 erstrecken.

Damit die Kohlebürste 14 spielfrei oder im Wesentlichen spielfrei in der Kohlebürstenführung axial verschiebbar ist, ist ein weiteres Federelement vorgesehen, das im Ausführungsbeispiel als Spiralbandfeder 56 ausgebildet ist, die sich auf den entlang der Längsseitenwandung 22 sich erstreckenden schmalen Längsseitenfläche 57 der Kohlebürste 14 abstützt und somit die Kohlebürste 14 in Richtung der Innenfläche der gegenüberliegenden Längsseitenwandung 20 drückt. Somit liegt die Kohlebürste 14 mit ihrer schmalen Längsseite 55 flächig an der Innenfläche der Längsseitenwandung 20 an.

Die Spiralbandfeder 56 geht von einer im Bereich der Längsseitenwandung 22 und der Querseitenwandung 26 verlaufenden Halterung aus, die einen Federeinrastpunkt 58 aufweist, über die die Vorspannung der Spiralbandfeder 56 eingestellt werden kann. Die Position des Federeinrastpunkts 58 kann dabei durch einen drehbaren Einsatz in einem Spritzgießwerkzeug eingestellt werden, in dem die Kohlebürstenhalterung 12 gespritzt wird. Durch das Abspritzen verschiedener Musterchargen kann die Winkelstellung des Federeinrastpunktes 58 experimentell einfach geändert werden, ohne dass das Spritzgießwerkzeug dauerhaft verändert werden muss. Somit kann auf einfache Weise die Anpresskraft der Spiralbandfeder 56 eingestellt werden, um auszuschließen, dass bei zu großer Krafteinwirkung auf die Kohlebürste 14 diese blockiert, also nicht mehr mittels der Schraubendruckfedern 48, 50 axial in Richtung einer nicht dargestellten Kontaktfläche verschoben werden kann.

Der Federeinrastpunkt 58 ist ein Schlitz 59 in einem Dom 61. In den Schlitz 59 wird das innere Ende der Spiralfeder 56 gesteckt. Um eine eindeutige Montage, also Ausrichtung der Spiralfeder 56 zu der Kohlebürste 14 sicherzustellen, durchsetzt der Schlitz 59 nicht vollständig den Dom 61, so dass das Ende der Spiralfeder 56 nur von einer Seite in den Dom 61 eingesteckt werden kann.

Von dem Steckkontakt 46 geht eine mit der Kohlebürste 14 verbundene Litze 60 aus, deren wirksame Länge derart ausgelegt ist, dass ungeachtet der über die Schraubendruckfedern 48, 50 auf die Kohlebürste 14 einwirkenden Kraft die Kohlebürste 14 nicht aus der Kohlebürstenführung vollständig herausgedrückt werden kann, also in dieser verbleibt. Dabei wird die Litze 60 derart von der Kohlebürstenführung zu dem Steckkontakt 40 durch den Basisabschnitt 16 geführt, dass eine teilweise Umlenkung erfolgt, also eine scheinbare Verkürzung der Litze 60. Hierdurch ergeben sich Vorteile beim Aufstecken der Litze auf den Steckkontakt 46, wenn die Kohlebürste 14 in die Kohlebürstenführung hineingeschoben ist.

Mit anderen Worten dient die Litze 60 als Kohlerückhaltung. Die Kohlebürste 14 kann demzufolge bei Anlieferung zum Montageort über eine definierte Länge aus der Kohlebürstenhalterung 12 vorstehen. Dabei ist die Litze 60 gespannt. Bei der Montage wird sodann die Kohlebürste 14 in die aus Kunststoff bestehende Kohlebürstenhalterung 12 hineingeschoben, wodurch die Litze 60 entspannt wird. Um eine einfache Befestigung und Montage zu ermöglichen, wird die Litze mit dem Steckkontakt 46 verbunden, der erwähntermaßen in der Kohlebürstenhalterung 12 verrastet ist. Somit ist eine einfache und schnelle Montage der Kohlebürste 14 ohne mechanische Hilfsmittel wie Schrauben oder einen separaten Verbindungsprozess wie das Anschweißen der Litze 60 an einen Kontakt möglich.

Dadurch, dass die Kohlebürste 14 über zwei im Seitenrandbereich sich abstützende Federelemente - im Ausführungsbeispiel in Form von Schraubendruckfedern 48, 50 - in Richtung einer Kontaktfläche wie ein Schleifband kraftbeaufschlagt wird, ist ein sicheres Aufliegen auf dieser sichergestellt, so dass auch Unebenheiten, wie diese zum Beispiel beim Verbindungspunkt zwischen den Enden eines Schleifbandes auftreten, nicht zu unerwünschten Geräuschen beim Passieren dieser führt. Gleichzeitig ergeben sich Vorteile für den Fall, dass die Kohlebürste auf Kontaktflächen abgestützt ist, die sich in wechselnden Richtungen zu der Kohlebürste bewegen. Zusätzlich führt das Andrücken der Kohlebürste 14 an eine Längsseiteninnenwandung durch die von der Spiralbandfeder 56 erfolgte Kraftbeaufschlagung zu einer Reduzierung des Spiels und damit gleichfalls Geräuschminderung.

## Patentansprüche

1. Kohlebürstenhalteranordnung (10) mit einer in einer Kohlebürstenhalterung (12) verlaufenden Kohlebürstenführung für eine in dieser axial verschiebbare Kohlebürste (14), zumindest einem auf rückseitige Stirnfläche der Kohlebürste sich abstützenden Federelement (48, 50) sowie einer von der Kohlebürste ausgehenden und mit dem Kohlebürstenhalter verbundenen Litze (60),
**dadurch gekennzeichnet**
**dass** innerhalb der Kohlebürstenhalterung (12) zwei jeweils auf einen Längsseitenrandbereich der rückseitigen Stirnfläche der Kohlebürste (14) abstützende erste Federelemente (48, 50) verlaufen und dass von der Kohlebürstenhalterung (12) ein quer zur Längsrichtung der Kohlebürste (14) und auf diese einwirkendes zweites Federelement (56) ausgeht.

2. Kohlebürstenhalteranordnung nach Anspruch 1
**dadurch gekennzeichnet**
**dass** bei mit der Kohlebürstenhalterung (12) verbundener Litze (60) diese eine wirksame Länge derart aufweist, dass die Kohlebürste (14) in der Kohlebürstenführung zurückgehalten ist.

3. Kohlebürstenhalterung nach Anspruch 1,
**dadurch gekennzeichnet**
**dass** die ersten Federelemente (48, 50) Sehraubendruckiedem sind.

4. Kohlebürstenhalterung nach zumindest Anspruch 1,
**dadurch gekennzeichnet**
**dass** das zweite Federelement (56) eine auf einen Längsseitenrand (57) der Kohlebürste (14) einwirkende Spiralbandfeder ist.

5. Kohlebürstenhalterung nach zumindest Anspruch 1,
**dadurch gekennzeichnet**
**dass** das zweite Federelement ein auf einen Längsseitenrand der Kohlebürste (14) einwirkender in Richtung der Kohlebürste vorgespannter Abschnitt der Kohlenbürstenhalterung (12), insbesondere ein zungenförmiger Ausschnitt aus einer Längsseitenwandung der Kohlenbürstenhalterung ist.

6. Kohlebürstenhalterung nach zumindest Anspruch 5,
**dadurch gekennzeichnet**
**dass** von dem das zweite Federelement bildenden Abschnitt ein in Richtung der Kohlebürste (14) sich erstreckender Vorsprung ausgeht.

7. Kohlebürstenhalterung nach zumindest einem vorhergehenden Ansprüche,
**dadurch gekennzeichnet**
**dass** die Kohlebürstenhalterung (12) aus Kunststoff besteht, insbesondere ein Spritzgussteil mit einer durch einen verstellbaren Einsatz in einem entsprechenden Spritzgießwerkzeug in seiner Stellung vorgegebenen Fixierung (58) für die Spiralbandfeder (56) ist.

8. Kohlebürstenhalterung nach zumindest einem vorhergehenden Ansprüche,
**dadurch gekennzeichnet**
**dass** wirksamer Querschnitt der die Kohlebürste (14) geführt aufnehmenden Kohlebürstenführung einer Breite B und einer Länge L mit L >> B aufweist, wobei insbesondere die Länge L sich auf 40 mm ≤ L ≤ 20 mm und die Breite B sich auf 6 mm ≤ B ≤ 2 mm belaufen.

9. Kohlebürstenhalterung nach zumindest einem vorhergehenden Ansprüche,
**dadurch gekennzeichnet**
**dass** die Kohlebürstenhalterung (12) im jeweiligen Verschiebeweg des ersten Federelementes (48, 50) zumindest eine Durchbrechung (52, 54) aufweist.

10. Kohlebürstenhalterung nach zumindest einem vorhergehenden Ansprüche,
**dadurch gekennzeichnet**
**dass** die Kohlebürstenhalterung (12) einen plattenförmigen Basisabschnitt (16) aufweist und dass von dem Basisabschnitt die durch die Längsseiten- und Querseitenwandungen (18, 20, 22, 24) begrenzte Kohlenbürstenführung ausgeht, deren Längsachse unter einem Winkel α mit 40° ≤ α ≤ 80° zu dem Basisabschnitt bzw. einer von dieser aufgespannten Ebene verläuft.

11. Kohlebürstenhalterung nach zumindest einem vorhergehenden Ansprüche,
**dadurch gekennzeichnet**
**dass** sich entlang jeweiligem Längsrand des Basisabschnitts (16) ein zungenförmiger Rastabschnitt (28, 30) erstreckt, zu dem beabstandet ein starrer oder im Wesentlichen starrer Steg oder Bodenabschnitt des Basisabschnitts verläuft, wobei insbesondere von dem Rastabschnitt ein Rastvorsprung (34, 36) ausgeht, der vorzugsweise über der bodenabgewandten Fläche des Rastabschnitts (28, 30) vorsteht.

12. Kohlebürstenhalterung nach zumindest Anspruch 2,
**dadurch gekennzeichnet**
**dass** die Litze mit einem Steckkontakt (46) verbunden ist, der sich senkrecht oder nahezu senkrecht zu dem Basisabschnitt (16) erstreckt und dass die Litze (60) durch die Kohlebütstenführung und einen Abschnitt des Basisabschnitts (16) herum zu dem Steckkontakt (46) geführt ist.

13. Kohlebürstenhalterung nach Anspruch 12,
**dadurch gekennzeichnet,**
**dass** der Steckkontakt (46) im Bereich einer der Lärigsseitenwandungen (20, 22) der Kohlebürstenführung verläuft, insbesondere derjenigen, die sich gegenüberliegend zu dem zweiten Federelement (56) erstreckt.

14. Kohlebürstenhalterung nach zumindest einem der vorhergehenden Ansprüche,
**dadurch gekennzeichnet**
**dass** die Querseitenwandung (24, 26) insbesondere im Mittenbereich eine beabstandet zu der Kohlebürste (14) verlaufende Ausbuchtung (40, 42) aufweist.

15. Kohlebürstenhalterung nach einem der Ansprüche 1 bis 9,
**dadurch gekennzeichnet**
**dass** die Kohlebürsterihalterung (12) aus einem plattenförmigen Basisabschnitt (16) und einem schräg zu diesem verlaufenden schachtförmigen die Kohlebürstenführung aufweisenden Abschnitt (18) besteht.

16. Anordnung zur Feuchtigkeitsmessung von in einer Trocknertrommel befindlichen Wäsche mit die Trocknertrommel umgebenen Schleifband, auf das eine Kohlebürste abgestützt ist, die von einer Kohlebürstenhalterung nach zumindest einem der Ansprüche 1 bis 16 aufgenommen ist.

17. Verwendung der Kohlebürstenhalteranordnung nach zumindest Anspruch 1 zur Signalerfassung für die Restfeuchtemessung in einem Wäschetrockner.

## Claims

1. Carbon brush holder arrangement (10) including a carbon brush guide that extends in a carbon brush holder (12), the said carbon brush guide being for a carbon brush (14) that is displaceable axially in the said carbon brush holder, at least one spring element (48, 50) that is supported on the rear end face of the carbon brush as well as a stranded conductor (60) that extends from the carbon brush and is connected to the carbon brush holder, **characterised in that** two first spring elements (48, 50) that are each supported on a longitudinal side edge region of the rear end face of the carbon brush (14) extend internally of the carbon brush holder (12) and **in that** a second spring element (56), which acts upon the said carbon brush at right angles to the longitudinal direction of the carbon brush (14), extends from the carbon brush holder (12).

2. Carbon brush holder arrangement according to claim 1, **characterised in that** with the stranded conductor (60) connected to the carbon brush holder (12), the effective length of the said stranded conductor is such that the carbon brush (14) is retained in the carbon brush guide.

3. Carbon brush holder according to claim 1, **characterised in that** the first spring elements (48, 50) are helical compression springs.

4. Carbon brush holder according to at least claim 1, **characterised in that** the second spring element (56) is a flat spiral spring that acts upon a longitudinal side edge (57) of the carbon brush (14).

5. Carbon brush holder according to at least claim 1, **characterised in that** the second spring element is a portion of the carbon brush holder (12) that acts upon a longitudinal side edge of the carbon brush (14) and is biased in the direction of the carbon brush, more especially a tongue-shaped cutout from a longitudinal side wall of the carbon brush holder.

6. Carbon brush holder according to at least claim 5, **characterised in that** a projection that extends in the direction of the carbon brush (14) extends from the portion that forms the second spring element.

7. Carbon brush holder according to at least one of the preceding claims, **characterised in that** the carbon brush holder (12) is produced from plastics material, and is more especially an injection moulded part with a securing means (58) for the flat spiral spring (56) that is preset in its position by means of an adjustable insert in a corresponding injection mould.

8. Carbon brush holder according to at least one of the preceding claims, **characterised in that** the effective cross-section of the carbon brush guide that accommodates the carbon brush (14) in a guided manner has a width B and a length L where L >> B, wherein more especially the length L is 40 mm ≤ L ≤ 20 mm and the width B is 6 mm ≤ B ≤ 2 mm.

9. Carbon brush holder according to at least one of the preceding claims, **characterised in that** the carbon brush holder (12) has at least one opening (52, 54) in the respective displacement path of the first spring element (48, 50).

10. Carbon brush holder according to at least one of the preceding claims, **characterised in that** the carbon brush holder (12) includes a plate-shaped base portion (16) and **in that** the carbon brush guide that is defined by the longitudinal side walls and the transverse side walls (18, 20, 22, 24) extends from the base portion, the longitudinal axis of the said carbon brush guide extending at an angle a where 40° ≤ α ≤ 80° relative to the base portion or respectively to a plane set by the said base portion.

11. Carbon brush holder according to at least one of the preceding claims, **characterised in that** a tongue-shaped locking portion (28, 30) extends along the respective longitudinal edge of the base portion (16), a rigid or substantially rigid bar or bottom section of the base portion extending relative to the said locking portion at a spacing therefrom, wherein a locking projection (34, 36) extends more especially from the locking portion, the said locking projection preferably protruding over the face of the locking portion (28, 30) remote from the bottom.

12. Carbon brush holder according to at least claim 2, **characterised in that** the stranded conductor is connected to a plug-in contact (46), which extends at right angles or almost at right angles to the base portion (16) and **in that** the stranded conductor (60) is guided through the carbon brush guide and around a section of the base portion (16) to the plug-in contact (46),

13. Carbon brush holder according to claim 12, **characterised in that** the plug-in contact (46) extends in the region of one of the longitudinal side walls (20, 22) of the carbon brush guide, more especially in the region of the one that extends opposite to the second spring element (56).

14. Carbon brush holder according to at least one of the preceding claims, **characterised in that** more especially the transverse side walls (24, 26), in the central region, include a bulge (40, 42) that extends at a spacing from the carbon brush (14).

15. Carbon brush according to one of claims 1 to 9, **characterised in that** the carbon brush holder (12) comprises a plate-shaped base portion (16) and a shaft-shaped portion (18) that extends inclinedly relative to the said base portion and includes the carbon brush guide.

16. Arrangement for the measuring of moisture in washing that is located in the drum of a drier, including an abrasive belt surrounding the drum of the drier, on which abrasive belt is supported the carbon brush, which is accommodated by a carbon brush holder according to at least one of claims 1 to 16.

17. Use of the carbon brush holder arrangement according to at least claim 1 for detecting the signal for measuring the residual moisture in a drier.

## Revendications

1. Dispositif porte-balai (10) comportant un guide-balai passant dans un porte-balai (12) destiné à un balai (14) mobile axialement, au moins un élément de ressort (48, 50) s'appuyant sur la face arrière du balai ainsi qu'une lisse (60) partant du balai et reliée au porte-balai,
**caractérisé en ce que**
deux premiers éléments de ressort (48, 50) s'appuyant respectivement sur une zone de bordure longitudinale de la face arrière du balai (14) passent à l'intérieur du porte-balai (12), et
un deuxième élément de ressort (56) transversal au sens longitudinal du balai (14) et agissant sur celui-ci part du porte-balai (12).

2. Dispositif porte-balai selon la revendication 1,
**caractérisé en ce que**
lorsque la lisse (60) est reliée au porte-balai (12), celle-ci a une longueur efficace telle que le balai (14) est retenu dans le guide-balai.

3. Dispositif porte-balai selon la revendication 1,
**caractérisé en ce que**
les premiers éléments de ressort (48, 50) sont des ressorts de pression à boudin.

4. Dispositif porte-balai selon au moins la revendication 1,
**caractérisé en ce que**
le deuxième élément de ressort (56) est un ressort à ruban hélicoïdal agissant sur une bordure longitudinale (57) du porte-balai (14).

5. Dispositif porte-balai selon au moins la revendication 1,
**caractérisé en ce que**
le deuxième élément de ressort est un tronçon du porte-balai (12) précontraint sur une bordure longitudinale du balai (14) en direction du balai, en particulier une découpe en forme de languette dans une paroi longitudinale du porte-balai.

6. Dispositif porte-balai selon au moins la revendication 5,
**caractérisé en ce qu'**
une saillie s'étendant en direction du balai (14) part du tronçon formant le deuxième élément de ressort.

7. Porte-balai selon au moins l'une quelconque des revendications précédentes,
**caractérisé en ce que**
le porte-balai (12) est en matière plastique, en particulier une pièce moulée par injection comportant une fixation (58), prédéfinie dans sa position par une utilisation mobile dans un moule correspondant, pour le ressort à ruban hélicoïdal (56).

8. Porte-balai selon au moins l'une quelconque des revendications précédentes,
**caractérisé en ce que**
la section efficace du guide-balai recevant le balai (14) tout en le guidant, a une largeur B et une longueur L, avec L >> B, la longueur L mesurant, en particulier, 20 mm ≤ L ≤ 40 mm, et avec pour la largeur B, 2 mm ≤ B ≤ 6 mm.

9. Porte-balai selon au moins l'une quelconque des revendications précédentes,
**caractérisé en ce que**
le porte-balai (12) présente au moins une percée (52, 54) sur la voie de déplacement respective du premier élément de ressort (48, 50).

10. Porte-balai selon au moins l'une quelconque des revendications précédentes,
**caractérisé en ce que**
le porte-balai (12) présente un tronçon de base (16) en forme de plaque et
le guide-balai limité par les parois (18, 20, 22, 24) des côtés longitudinal et transversal part du tronçon de base, guide-balai dont l'axe longitudinal forme un angle α de 40° ≤ α ≤ 80° par rapport au tronçon de base et/ou à un plan tendu depuis celui-ci.

11. Porte-balai selon au moins l'une quelconque des revendications précédentes, **caractérisé en ce qu'**
un tronçon d'encliquetage en forme de languette (28, 30), à distance duquel passe une entretoise ou un tronçon de fond du tronçon de base rigide ou essentiellement rigide, passe le long de la bordure longitudinale respective du tronçon de base (16), une saillie d'encliquetage (34, 36) qui dépasse de préférence de la surface du tronçon d'encliquetage (28, 30) opposée au fond, partant en particulier du tronçon d'encliquetage.

12. Porte-balai selon au moins la revendication 2,
**caractérisé en ce que**
la lisse est reliée à un contact embrochable (46) qui est perpendiculaire ou pratiquement perpendiculaire au tronçon de base (16), et
la lisse (60) passe à travers le guide-balai et un segment du tronçon de base (16) en direction du contact embrochable (46).

13. Porte-balai selon la revendication 12,
**caractérisé en ce que**
le contact embrochable (46) passe au niveau de l'une des parois longitudinales (20, 22) du guide-balai, en particulier celle qui s'étend en face du deuxième élément de ressort (56).

14. Porte-balai selon au moins l'une quelconque des revendications précédentes, **caractérisé en ce que**
la paroi transversale (24, 26) présente, en particulier dans la zone centrale, une courbure (40, 42) passant à distance du balai (14).

15. Porte-balai selon l'une quelconque des revendications 1 à 9,
**caractérisé en ce que**
le porte-balai (12) est constitué d'un tronçon de base (16) en forme de plaque et d'un tronçon (18) en forme de cuvette, en diagonale par rapport à celui-ci et présentant le guide-balai.

16. Dispositif de mesure de l'humidité du linge se trouvant dans le tambour du sèche-linge comportant une bande abrasive entourant le tambour, sur laquelle s'appuie un balai logé dans un porte-balai selon au moins l'une quelconque des revendications 1 à 16.

17. Utilisation du dispositif porte-balai selon au moins la revendication 1, pour détecter le signal d'humidité résiduelle dans un sèche-linge.
